# EUROPEAN PATENT APPLICATION

(11) **EP 4 671 520 A1**
(43) Date of publication of application: **31.12.2025**
(21) Application number: 24760329.3
(22) Date of filing: 20.02.2024
(51) Int. Cl.: F02C 3/28, C01B 3/26, C10L 3/00

(54) **POWER GENERATION SYSTEM**

(30) Priority: 21.02.2023 JP 2023025215
(71) Applicant: Mitsubishi Heavy Industries, Ltd., Tokyo 100-8332 (JP)
(72) Inventor: TORII, Shunsuke, Tokyo 100-8332 (JP); YOSHIMOTO, Toshizumi, Tokyo 100-8332 (JP); TAMURA, Ken, Tokyo 100-8332 (JP)
(74) Representative: Hoffmann Eitle
(86) International application number: PCT/JP2024/005899
(87) International publication number: WO 2024/177031

(57) **Abstract**

This power generation system includes a pyrolysis device (10) and a gas turbine (16). The pyrolysis device is for pyrolyzing a hydrocarbon gas into hydrogen and carbon. The fuel of the gas turbine includes a gas mixture of hydrogen and hydrocarbon gas generated by pyrolyzing said hydrocarbon gas by the pyrolysis device.

## Description

### TECHNICAL FIELD

The present disclosure relates to a power generation system.

### BACKGROUND ART

Patent Literature 1 describes an apparatus that thermally decomposes a hydrocarbon gas, such as methane, with a catalyst to extract hydrogen.

### CITATION LIST

### Patent Literature

Patent Document 1: JP2022-24997A

### SUMMARY OF INVENTION

### Technical Problem

The thermal decomposition does not decompose all of the hydrocarbon gas into hydrogen and carbon, and a gas in which the hydrocarbon gas is mixed at a certain ratio is produced. When using the hydrogen extracted from the gas produced in such a manner to generate electric power, the hydrogen extraction process decreases the power generation efficiency.

### Solution to Problem

One aspect of the present disclosure provides a power generation system. The power generation system includes a pyrolysis device and a gas turbine. The pyrolysis device thermally decomposes a hydrocarbon gas into hydrogen and carbon. The gas turbine is fueled by a gas mixture of hydrocarbon gas and hydrogen produced by thermally decomposing the hydrocarbon gas with the pyrolysis device.

### BRIEF DESCRIPTION OF DRAWINGS

Fig. 1 is a block diagram illustrating a first embodiment of a power generation system.
Fig. 2 is a block diagram illustrating a power generation system of an example compared with the embodiment.
Fig. 3 is a block diagram illustrating a second embodiment of a power generation system.
Fig. 4 is a block diagram illustrating a third embodiment of a power generation system.
Fig. 5 is a block diagram illustrating a fourth embodiment of a power generation system.
Fig. 6 is a block diagram illustrating a fifth embodiment of a power generation system.
Fig. 7 is a block diagram illustrating a sixth embodiment of a power generation system.
Fig. 8 is a block diagram illustrating a seventh embodiment of a power generation system.

### DESCRIPTION OF EMBODIMENTS

### First Embodiment

A first embodiment will now be described with reference to the drawings.

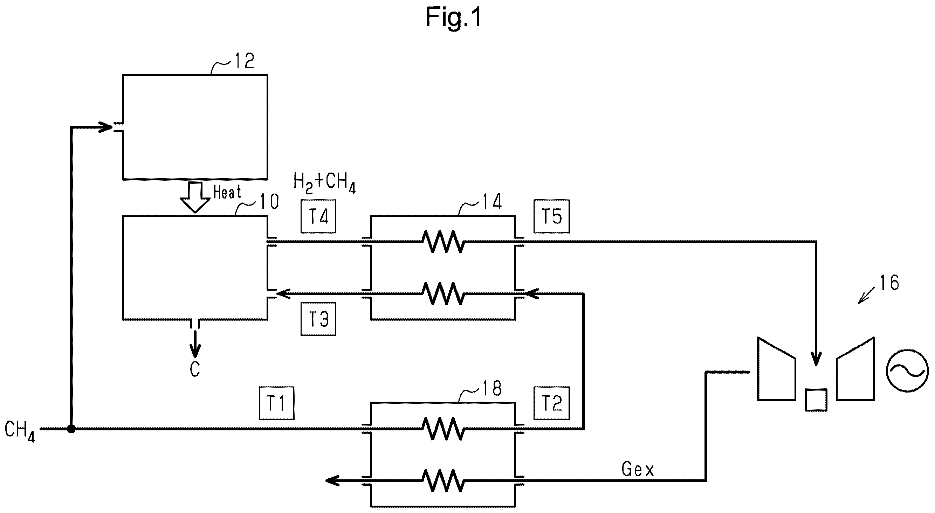

Fig. 1 shows a power generation system in accordance with the present embodiment.

Fig. 1 illustrates a pyrolysis device 10 that thermally decomposes methane into hydrogen and carbon with a catalyst. An example of a catalyst is iron. A heater 12 is a device that supplies heat to the pyrolysis device 10. More specifically, the heater 12 is a device that supplies heat to methane, which reacts in the pyrolysis device 10, and to the catalyst. Heat is supplied to set the temperature of the methane, which reacts in the pyrolysis device 10, and the catalyst to, for example, 600°C to 900°C. The heater 12 supplies the pyrolysis device 10 with the heat obtained by burning methane.

The methane supplied to the pyrolysis device 10 is heated by a produced gas heat exchanger 14.

The produced gas heat exchanger 14 is a device that heats the methane supplied to the pyrolysis device 10 with the heat of hydrogen and methane flowing out of the pyrolysis device 10. Before being heated by the produced gas heat exchanger 14, the methane has temperature T2 that increases to temperature T3 when heated by the produced gas heat exchanger 14. Temperature T2 may be, for example, 100°C to 400°C. Temperature T3 may be, for example, 500°C to 800°C.

The produced gas heat exchanger 14 absorbs the heat of a gas mixture of methane and hydrogen flowing out of the pyrolysis device 10. Thus, temperature T5 of the gas mixture flowing out of the produced gas heat exchanger 14 is lower than temperature T4 of the gas mixture supplied to the produced gas heat exchanger 14. An example of temperature T4 is 600°C to 900°C. An example of temperature T5 is 200°C to 500°C.

The gas mixture flowing out of the produced gas heat exchanger 14 fuels a gas turbine 16 to generate electric power.

An exhaust gas heat exchanger 18 is a device that heats the methane supplied to the produced gas heat exchanger 14 with the heat of exhaust gas Gex from the gas turbine 16. Temperature T1 of the methane supplied to the exhaust gas heat exchanger 18 is increased to temperature T2 of the exhaust gas heat exchanger 18. Temperature T1 may be, for example, 20°C to 50°C.

The pyrolysis device 10 produces solid carbon. Carbon is removed through a known technique.

### Operation and Advantages of Present Embodiment

In the pyrolysis device 10, methane is thermally decomposed into carbon and hydrogen. The thermal decomposition reaction includes a state of thermal equilibrium. An equilibrium state is a state in which methane, carbon, and hydrogen are mixed. The pyrolysis device 10 is in a state in which methane, carbon, and hydrogen are mixed regardless of whether the equilibrium state occurs. Thus, a fuel gas extracted from the pyrolysis device 10 is a gas mixture of methane and hydrogen.

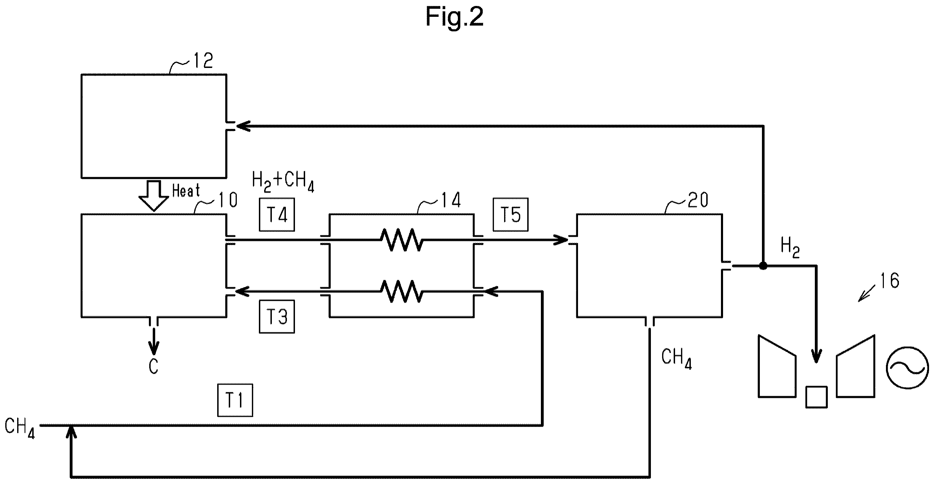

The gas mixture from the pyrolysis device 10 fuels the gas turbine 16 without being separated into hydrogen and methane. This increases the power generation efficiency as compared with when separating hydrogen from the gas mixture as shown in Fig. 2 to fuel the gas turbine 16 with the hydrogen.

Fig. 2 illustrates a comparative example of the present embodiment. In Fig. 2, same reference numerals are given to those members that are the same as the corresponding members shown in Fig. 1.

In the comparative example illustrated in Fig. 2, a purifying device 20 separates hydrogen from the gas mixture flowing out of the produced gas heat exchanger 14. The separated hydrogen fuels the gas turbine 16 and the heater 12. The purifying device 20 uses Pressure Swing Adsorption (PSA). The gas mixture supplied for PSA is set to have a temperature close to the ambient temperature. Thus, the temperature of the gas mixture flowing out of the pyrolysis device 10 has to be decreased greatly to produce hydrogen. This results in an energy loss. The temperature of the hydrogen extracted by the purifying device 20 also has the ambient temperature. This decreases the amount of heat supplied to the gas turbine 16 and the heater 12.

The present embodiment described above further has the following operation and advantages.

(1-1) There is an upper limit to the temperature of the gas supplied to the gas turbine 16. The temperature of the gas mixture flowing out of the pyrolysis device 10 may exceed the upper limit. Thus, the produced gas heat exchanger 14 uses the heat of the gas mixture to heat the methane supplied to the pyrolysis device 10. This decreases the temperature of the gas mixture to a certain extent. In addition, the heat absorbed to decrease the temperature of the gas mixture is transferred to the methane supplied to the pyrolysis device 10. This avoids a situation in which the temperature of gas mixture supplied to the gas turbine 16 becomes excessively high, while effectively using the heat of the gas mixture flowing out of the pyrolysis device 10.

(1-2) The methane supplied to produced gas heat exchanger 14 is heated by the exhaust gas of the gas turbine 16. This decreases the amount of heat used by the produced gas heat exchanger 14 in order to increase the temperature of the methane that is supplied to the pyrolysis device 10 to the predetermined temperature T3.

(1-3) The heater 12 is fueled by methane. In comparison with when using hydrogen as a fuel as shown in Fig. 2, the efficiency for producing hydrogen is increased.

### Second Embodiment

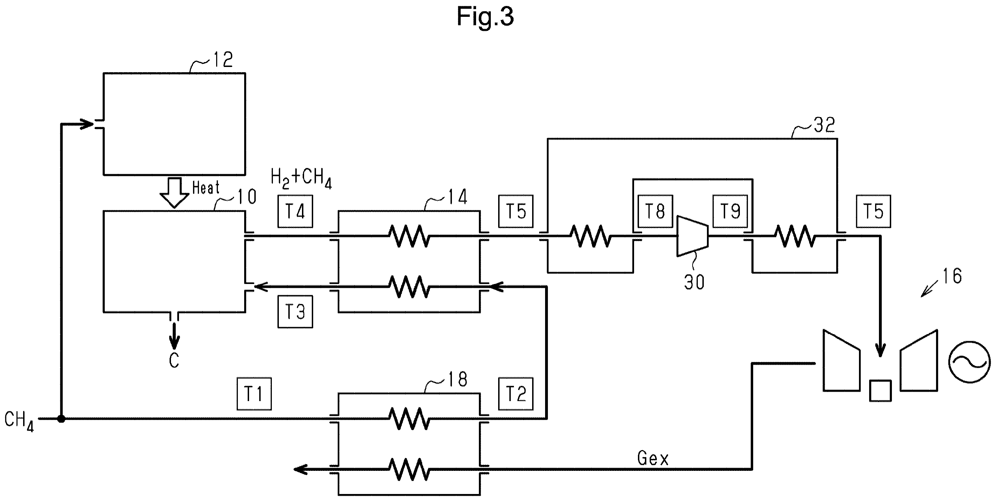

Fig. 3 shows a power generation system in accordance with the present embodiment. In Fig. 3, same reference numerals are given to those members that are the same as the corresponding members shown in Fig. 1.

The power generation system illustrated in Fig. 3 includes a compressor 30 that compresses the gas mixture flowing out of the produced gas heat exchanger 14. The compressor 30 is configured to compress and pressurize the gas mixture so that the gas mixture is supplied under a suitable pressure to the gas turbine 16.

Further, the power generation system includes an upstream-downstream heat exchanger 32 that uses the heat of the gas mixture at the upstream side of the compressor 30 to heat the gas mixture at the downstream side of the compressor 30. The upstream-downstream heat exchanger 32 decreases the gas mixture from temperature T5 when flowing out of the produced gas heat exchanger 14 to temperature T8 when supplied to the compressor 30. Temperature T8 is, for example, 20°C to 150°C. The gas mixture supplied to the compressor 30 is compressed by the compressor 30 and increased to temperature T9. Temperature T9 is, for example, 60°C to 400°C.

The gas mixture compressed by the compressor 30 is heated by the upstream-downstream heat exchanger 32 and increased to temperature T5.

In addition to the advantages of the first embodiment, the present embodiment described above has the following operation and advantages.

(2-1) Preferably, the pressure in the pyrolysis device 10 is set to meet a requirement for increasing the thermal decomposition reaction speed or the like. Further, preferably, the pressure of the fuel gas supplied to the gas turbine 16 is set to meet a requirement for efficiently burning fuel. These two requirements may not be in correspondence with each other. Thus, in the present embodiment, the power generation system includes the compressor 30. This sets the gas mixture supplied to the gas turbine 16 to a suitable pressure when the pressure of the gas mixture flowing out of the pyrolysis device 10 is lower than the suitable pressure for the gas mixture supplied to the gas turbine 16.

(2-2) Temperature T8 of the gas mixture supplied to the compressor 30 is decreased from temperature T5 of the gas mixture flowing out of the produced gas heat exchanger 14. Thus, the gas mixture is compressed more efficiently than when the gas mixture having temperature T5 is directly supplied to the compressor 30.

(2-3) The power generation system includes the upstream-downstream heat exchanger 32. Thus, the heat generated by temporarily decreasing the temperature of the gas mixture when the gas mixture is supplied to the compressor 30 is transferred to the gas mixture at the downstream side of the compressor 30. This effectively uses the heat absorbed from the gas mixture before the gas mixture is supplied to the compressor 30.

### Third Embodiment

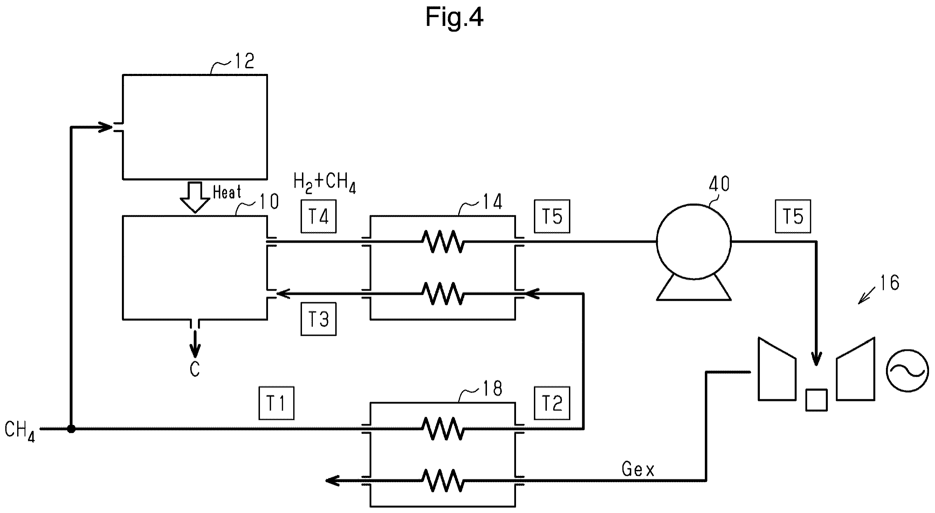

Fig. 4 shows a power generation system in accordance with the present embodiment. In Fig. 4, same reference numerals are given to those members that are the same as the corresponding members shown in Fig. 1.

As shown in Fig. 4, the power generation system includes a buffer tank 40. The buffer tank 40 is supplied with the gas mixture flowing out of the produced gas heat exchanger 14. The buffer tank 40 stores the gas mixture supplied to the gas turbine 16.

In addition to the advantages of the first embodiment, the present embodiment described above has the following operation and advantages.

(3-1) The power generation system includes the buffer tank 40. This allows the gas turbine 16 to be stably supplied with the required amount of the gas mixture even if the required load on the gas turbine 16 varies and changes the flow rate of the gas mixture supplied to the gas turbine 16.

### Fourth Embodiment

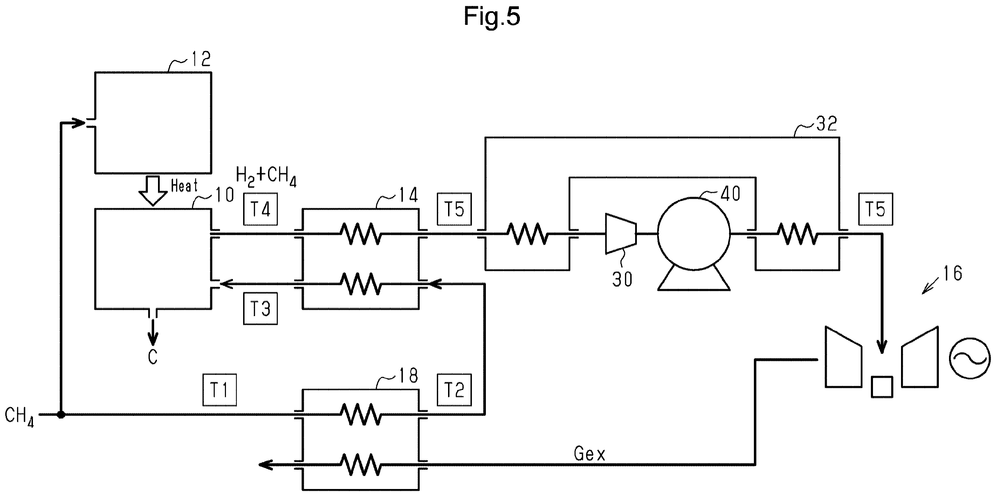

Fig. 5 shows a power generation system in accordance with the present embodiment. In Fig. 5, same reference numerals are given to those members that are the same as the corresponding members shown in Fig. 1.

As shown in Fig. 5, the power generation system includes the compressor 30, which compresses the gas mixture flowing out of the produced gas heat exchanger 14, and the buffer tank 40, which stores the gas mixture compressed by the compressor 30. Further, the power generation system includes the upstream-downstream heat exchanger 32, which uses the heat of the gas mixture at the upstream side of the compressor 30 to heat the gas mixture at the downstream side of the buffer tank 40.

In addition to the operation and advantages of the second and third embodiment, the present embodiment has the advantages described below.

(4-1) The buffer tank 40 is arranged at the downstream side of the compressor 30. This allows more gas mixture to be held in the buffer tank 40 than when the compressor 30 is not arranged at the upstream side of the buffer tank 40.

(4-2) The gas mixture at the downstream side of the buffer tank 40 is heated by the upstream-downstream heat exchanger 32. This allows more gas mixture to be stored in the buffer tank 40 than when the upstream-downstream heat exchanger 32 heats the gas mixture between the compressor 30 and the buffer tank 40.

### Fifth Embodiment

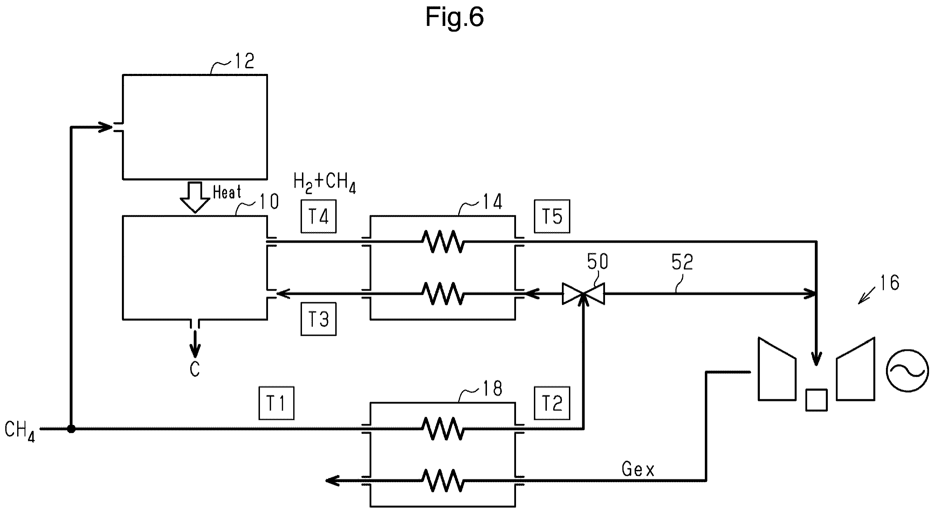

Fig. 6 shows a power generation system in accordance with the present embodiment. In Fig. 6, same reference numerals are given to those members that are the same as the corresponding members shown in Fig. 1.

As shown in Fig. 6, the power generation system includes a bypass passage 52. The bypass passage 52 bypasses the pyrolysis device 10 and directly supplies the gas turbine 16 with the methane heated by the exhaust gas heat exchanger 18.

More specifically, a flow rate control valve 50 controls the ratio of the methane flowing out of the exhaust gas heat exchanger 18 that is supplied to the produced gas heat exchanger 14 and to the gas turbine 16. The ratio of the methane supplied through the bypass passage 52 to the gas turbine 16 is 0% to 100%.

In addition to the advantages of the first embodiment, the present embodiment described above has the following operation and advantages.

(5-1) The power generation system includes the bypass passage 52. This allows for adjustment of the hydrogen concentration in the gas mixture supplied to the gas turbine 16.

(5-2) The methane heated by the exhaust gas heat exchanger 18 is supplied to the bypass passage 52. This allows the temperature of the methane supplied to the gas turbine 16 to be higher than when the methane supplied to the exhaust gas heat exchanger 18 is supplied to the bypass passage 52.

### Sixth Embodiment

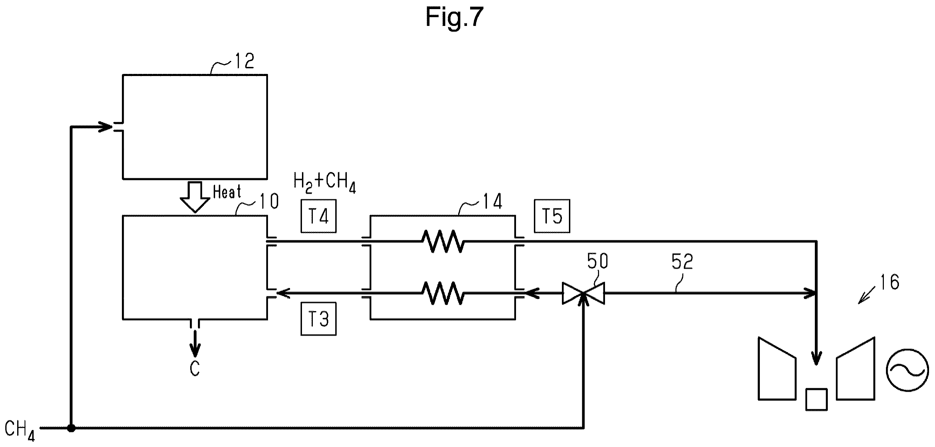

Fig. 7 shows a power generation system in accordance with the present embodiment. In Fig. 7, same reference numerals are given to those members that are the same as the corresponding members shown in Fig. 6.

As shown in Fig. 7, the power generation system does not include the exhaust gas heat exchanger 18. Further, the power generation system includes the bypass passage 52, which bypasses the produced gas heat exchanger 14 and supplies the gas turbine 16 with methane.

More specifically, the power generation system controls the ratio of the methane supplied to the produced gas heat exchanger 14 and to the gas turbine 16 with the flow rate control valve 50. The ratio of the methane supplied through the bypass passage 52 to the gas turbine 16 is 0% to 100%.

The present embodiment described above has advantage (1-1) of the first embodiment and advantage (5-1) of the fifth embodiment.

### Seventh Embodiment

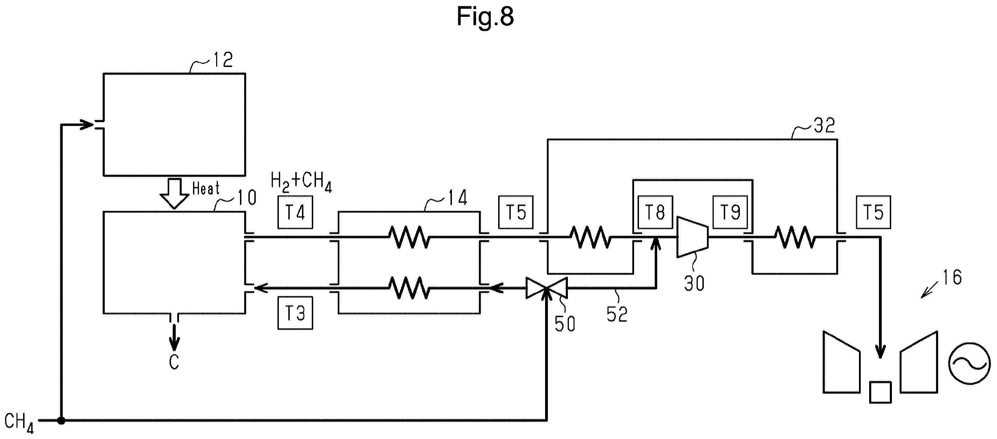

Fig. 8 shows a power generation system in accordance with the present embodiment. In Fig. 8, same reference numerals are given to those members that are the same as the corresponding members shown in Fig. 7.

As shown in Fig. 8, the power generation system does not include the exhaust gas heat exchanger 18. Further, the power generation system includes the bypass passage 52, which bypasses the produced gas heat exchanger 14 and supplies the gas turbine 16 with methane.

More specifically, the power generation system controls the ratio of the methane supplied to the produced gas heat exchanger 14 and to the gas turbine 16 with the flow rate control valve 50. The ratio of the methane supplied through the bypass passage 52 to the gas turbine 16 is 0% to 100%.

The power generation system further includes the compressor 30, which compresses the gas mixture flowing out of the produced gas heat exchanger 14. The compressor 30 is configured to compress and pressurize the gas mixture so that the gas mixture is supplied under a suitable pressure to the gas turbine 16.

Further, the power generation system includes the upstream-downstream heat exchanger 32, which heats the gas mixture at the downstream side of the compressor 30 with the heat of the gas mixture at the upstream side of the compressor 30.

The bypass passage 52 merges with the flow passage of the gas mixture, from which heat is absorbed by the upstream-downstream heat exchanger 32, at the upstream side of the compressor 30.

In addition to the advantages of the second embodiment and the advantages of the seventh embodiment, the present embodiment has the operation and advantage described below.

(7-1) The bypass passage 52 is connected to the upstream side of the compressor 30. This increases the pressure of the methane supplied through the bypass passage 52 to the gas turbine 16 without increasing the number of compressors.

### Corresponding Relationship

The corresponding relationship of the elements in the above embodiments and the elements in the Clause section will now be described. The corresponding relationship will be described in association with the clause number. In clauses 1, 2, and 9, hydrocarbon gas corresponds to methane. Fueling the gas turbine with a gas mixture corresponds to supplying the gas turbine 16 with the gas mixture of methane and hydrogen flowing out of the pyrolysis device 10, as shown in Figs. 1 and 3 to 8. Clause 3 corresponds to a situation in which the pyrolysis device 10 is supplied with methane that acts as a heat generating source. Clauses 4 and 5 correspond to Figs. 3, 5, and 8. Clause 6 corresponds to Figs. 4 and 5. Clause 7 corresponds to Figs. 6 to 8. Clause 8 corresponds to Fig.6.

### Other Embodiments

The embodiments may be modified as described below. The above embodiments and the modified examples described below may be combined as long as there is no technical contradiction.

### Heater

In the heater 12, the heat for thermally decomposing methane does not necessarily have to be generated by burning methane. For example, the heat for thermally decomposing methane may be generated by burning the gas mixture of methane and hydrogen obtained by thermally decomposing methane. Further, for example, the exhaust gas heat of the gas turbine 16 may be used.

For example, if temperature T3 of the methane heated by the produced gas heat exchanger 14 is high enough, the heater 12 may be omitted.

### Pyrolysis Device

In the above embodiment, the pyrolysis device 10 extracts carbon and gas mixture separately. This, however, is not a limitation. For example, the produced gas heat exchanger 14 may be supplied with a substance in which the gas mixture is mixed with carbon. In this case, a cyclone or the like may be arranged at the downstream side of the produced gas heat exchanger 14 to remove the carbon.

### Produced Gas Heat Exchanger

In Figs. 1 and 3 to 6, the methane subject to heating in the produced gas heat exchanger 14 is methane having the ambient temperature that is heated by exhaust gas. This, however, is not a limitation. For example, methane may be heated by the heat obtained by burning methane.

In Figs. 1 and 3 to 6, the methane subject to heating in the produced gas heat exchanger 14 may be methane having the ambient temperature. In other words, methane does not have to be heated by exhaust gas or the like.

The produced gas heat exchanger 14 does not necessarily have to be included.

### Upstream-Downstream Heat Exchanger

In Figs. 3, 5, and 8, the upstream-downstream heat exchanger 32 heats the gas mixture at the downstream side of the compressor 30 with only the heat of the gas mixture at the upstream side of the compressor 30. For example, the heat of the gas mixture of methane and hydrogen flowing out of the pyrolysis device 10 may also be used.

The upstream-downstream heat exchanger 32 does not necessarily have to be included. For example, the heat of the gas mixture at the upstream side of the compressor 30 may be methane having the ambient temperature that is heated so that the methane is subject to heating at the produced gas heat exchanger 14. Further, the gas mixture at the downstream side of the compressor 30 may be heated by, for example, the gas mixture of methane and hydrogen flowing out of the pyrolysis device 10.

The temperature of the gas mixture supplied to the upstream-downstream heat exchanger 32 and the temperature of the gas mixture supplied from the upstream-downstream heat exchanger 32 to the gas turbine 16 do not necessarily have to be the same.

### Bypass Line

In the structures shown in Figs. 7 and 8, the exhaust gas heat exchanger 18 may be arranged between the flowrate control valve 50 and the produced gas heat exchanger 14.

The bypass passage 52 may be connected to the inlet of the buffer tank 40. This is effective for a structure such as that shown in Fig. 4 in which the compressor 30 is not included. In this case, the methane supplied to the bypass passage 52 does not have to be heated by the exhaust gas heat exchanger 18.

### Fueling Gas Turbine

Methane supplied to the pyrolysis device 10 or the like may be extracted from natural gas or the like, and the gas turbine 16 may be fueled by liquefied natural gas in addition to the gas mixture of hydrogen and methane.

### Hydrocarbon Gas

The hydrocarbon gas does not necessarily have to be methane. For example, the hydrocarbon gas may be propane. In this case, the substances flowing out of the pyrolysis device include methane, ethylene, propane, and the like in addition to hydrogen and carbon.

### Clauses

1. A power generation system, including:
   a pyrolysis device; and
   a gas turbine, where
   the pyrolysis device thermally decomposes a hydrocarbon gas into hydrogen and carbon, and
   the gas turbine is fueled by a gas mixture of hydrocarbon gas and hydrogen produced by the thermal decomposition performed on the hydrocarbon gas with the pyrolysis device.
      In the structure described above, the gas turbine is fueled by the gas mixture of hydrocarbon gas and hydrogen obtained by thermally decomposing the hydrocarbon gas. Thus, compared with when selectively extracting hydrogen from the gas mixture to fuel the gas turbine, the process for extracting hydrogen from the gas mixture can be omitted. This increases the power generation efficiency as compared with when using the hydrogen extracted from the gas mixture to fuel the gas turbine.
2. The power generation system according to clause 1, further including a produced gas heat exchanger configured to transfer heat of the gas mixture produced by the pyrolysis device to the hydrocarbon gas supplied to the pyrolysis device.
3. The power generation system according to clause 1 or 2, where the pyrolysis device is configured to use heat that burned hydrocarbon gas for the thermal decomposition.
4. The power generation system according to any one of clauses 1 to 3, further including a compressor configured to compress the gas mixture supplied to the gas turbine.
5. The power generation system according to clause 4, further including an upstream-downstream heat exchanger configured to absorb heat from the gas mixture supplied to the compressor so as to decrease a temperature of the gas mixture supplied to the compressor, and configured to transfer the heat, absorbed from the gas mixture supplied to the compressor, to the gas mixture compressed by the compressor so as to increase the temperature of the gas mixture compressed by the compressor.
6. The power generation system according to any one of clauses 1 to 5, further including a buffer tank configured to hold the gas mixture produced by the pyrolysis device before the gas mixture is supplied to the gas turbine.
7. The power generation system according to any one of clauses 1 to 6, further including a bypass line configured to supply the hydrocarbon gas to the gas turbine by bypassing the pyrolysis device.
8. The power generation system according to clause 7, where the bypass line is configured to be heated by heat of an exhaust of the gas turbine.
9. The power generation system according to any one of clauses 1 to 8, where the hydrocarbon gas is methane.

## Claims

1. A power generation system, comprising:
a pyrolysis device; and
a gas turbine, wherein
the pyrolysis device performs thermal decomposition on a hydrocarbon gas to thermally decompose the hydrocarbon gas into hydrogen and carbon, and
the gas turbine is fueled by a gas mixture of hydrocarbon gas and hydrogen produced by the thermal decomposition performed on the hydrocarbon gas with the pyrolysis device.

2. The power generation system according to claim 1, further comprising a produced gas heat exchanger configured to transfer heat of the gas mixture produced by the pyrolysis device to the hydrocarbon gas supplied to the pyrolysis device.

3. The power generation system according to claim 1, wherein the pyrolysis device is configured to use heat that burned hydrocarbon gas for the thermal decomposition.

4. The power generation system according to claim 1, further comprising a compressor configured to compress the gas mixture supplied to the gas turbine.

5. The power generation system according to claim 4, further comprising an upstream-downstream heat exchanger configured to absorb heat from the gas mixture supplied to the compressor so as to decrease a temperature of the gas mixture supplied to the compressor, and configured to transfer the heat, absorbed from the gas mixture supplied to the compressor, to the gas mixture compressed by the compressor so as to increase the temperature of the gas mixture compressed by the compressor.

6. The power generation system according to claim 1, further comprising a buffer tank configured to hold the gas mixture produced by the pyrolysis device before the gas mixture is supplied to the gas turbine.

7. The power generation system according to claim 1, further comprising a bypass line configured to supply the hydrocarbon gas to the gas turbine by bypassing the pyrolysis device.

8. The power generation system according to claim 7, wherein the bypass line is configured to be heated by heat of an exhaust of the gas turbine.

9. The power generation system according to claim 1, wherein the hydrocarbon gas is methane.
